# EUROPEAN PATENT SPECIFICATION

(11) **EP 3 544 268 B1**
(45) Date of publication and mention of the grant of the patent: **03.06.2020**
(21) Application number: 18207529.1
(22) Date of filing: 21.11.2018
(51) Int. Cl.: H04M 1/02

(54) **ELECTRONIC DEVICE AND MANUFACTURING METHOD FOR AN ELECTRONIC DEVICE**
ELEKTRONISCHE VORRICHTUNG UND VERFAHREN ZUR HERSTELLUNG EINER ELEKTRONISCHEN VORRICHTUNG
DISPOSITIF ÉLECTRONIQUE ET PROCÉDÉ DE FABRICATION D'UN DISPOSITIF ÉLECTRONIQUE

(30) Priority: 21.03.2018 CN 201810234679
(43) Date of publication of application: 25.09.2019
(60) Divisional application: 20167822.4
(73) Proprietor: GUANGDONG OPPO MOBILE TELECOMMUNICATIONS CORP., LTD., Wusha, Chang'an Dongguan, Guangdong 523860 (CN)
(72) Inventor: ZHANG, Haiping, Dongguan, Guangdong 523860 (CN)
(74) Representative: Manitz Finsterwald Patent- und Rechtsanwaltspartnerschaft mbB

(56) References cited:
- CN-U- 206 389 421
- US-A1- 2017 126 868

## Description

### FIELD

The present disclosure relates to a field of electronic technology, and more particularly to an electronic device and a manufacturing method for an electronic device.

### BACKGROUND

Generally, an electronic device such as a mobile phone includes elements such as a display screen and a light sensor, and the light sensor can be used for detecting ambient brightness around the electronic device. With the development of mobile phone technology and the needs of users, a full-screen mobile phone has become a development trend of mobile phones, but the position of sensors such as light sensors makes the screen-to-body ratio of mobile phones relatively small. Therefore, how to properly position the various sensors has become an urgent problem.

The document CN 206 389 421 U discloses an electronic device with a light sensor lacking at least the features of the characterizing portion of Claim 1. The document US 2017/126868 A1 discloses another electronic device with a light sensor.

### SUMMARY

The invention is defined in Claim 1.

The embodiments of the present disclosure provide an electronic device and a manufacturing method for the electronic device. The electronic device according to Claim 1 includes: a display screen, including a front surface used for luminescence display and a back surface, and the display screen including a display area and a non-display area surrounding the display area; a light sensor arranged below the back surface and opposite to the display area; and a light guiding element arranged below the back surface and being configured to transmit light, penetrating the non-display area from the front surface, to the light sensor.

According to the invention, the light guiding element includes a vertical portion perpendicular to the back surface and a horizontal portion connected to the vertical portion, the vertical portion is located opposite to the non-display area, and the horizontal portion extends from a bottom end of the vertical portion towards the light sensor.

According to the invention, a light incident direction of the light guiding element is perpendicular to the non-display area, and/or a light exit direction of the light guiding element is perpendicular to a light sensing face of the light sensor.

According to some embodiments of the present disclosure, a peripheral surface of the light guiding element is coated with a black coating.

According to the invention, an arrangement of the light sensor ranges between a first state where the light sensing face is perpendicular to the back surface and a second state where the light sensing face is away from the back surface so that an included angle between a light sensing face of the light sensor and the back surface ranges from 90° to 180°.

According to some embodiments of the present disclosure, the electronic device includes an infrared sensor and a light blocking element, the infrared sensor includes an emitter and a receiver, the emitter is located adjacent to the second surface and opposite to the non-display area, the emitter is configured to emit infrared light, and the receiver is configured to receive the infrared light;
the light blocking element is arranged between the emitter and the display area, and the light blocking element is configured to block the infrared light emitted from the emitter from entering the display area.

According to some embodiments of the present disclosure, the infrared sensor includes an encapsulation body encapsulating the emitter and the receiver, and the light blocking element is fixed to the encapsulation body and located between the emitter and the receiver.

According to some embodiments of the present disclosure, the light blocking element is abutted against the second surface.

According to some embodiments of the present disclosure, the light blocking element and the encapsulation body form an integral structure.

According to some embodiments of the present disclosure, the electronic device further includes a first coating layer, the first coating layer is coated on the second surface and covers the emitter, the first coating layer is configured to be permeable to the infrared light and intercept visible light, and the emitter is configured to emit the infrared light through the first coating layer.

According to some embodiments of the present disclosure, the infrared sensor is a proximity sensor, the emitter is configured to emit the infrared light through the first coating layer, and the receiver is configured to receive the infrared light reflected by an object so as to detect a distance between the object and the first surface.

According to some embodiments of the present disclosure, the electronic device further includes a second coating layer being coated on the second surface and covering the receiver, the second coating layer being configured to be permeable to the infrared light and intercept visible light, and the receiver being configured to receive the infrared light through the display area and the second coating layer.

According to some embodiments of the present disclosure, the electronic device further includes a buffer layer covering the second surface.

According to some embodiments of the present disclosure, the electronic device further includes a metal sheet covering the buffer layer.

The manufacturing method for the electronic device according to Claim 12 includes the following operations:
providing a display screen, the display screen including a display area and a non-display area surrounding the display area, and the display screen including a front surface used for luminescence display and a back surface opposite to the first surface;
providing a light sensor and arranging the light sensor below the back surface and opposite the display area; and
providing a light guiding element;
arranging the light guiding element below the back surface and enabling the light guiding element to guide the light, penetrating the non-display area from the front surface to the light sensor.

In the electronic device and manufacturing method thereof according to embodiments of the present disclosure, the light sensor is arranged below the display area so as to ensure that the electronic device realizes the full-screen effect. In addition, the light guiding element guides the visible light to the light sensor through the non-display area, so that the light sensor can sense and detect the ambient light intensity around the electronic device accurately, thus preventing the light emitted from the display area from causing bad effect on the light sensor.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a perspective view of an electronic device according to embodiments of the present disclosure;
Fig. 2 is a plan view of an electronic device according to embodiments of the present disclosure;
Fig. 3 is a sectional view of the electronic device in fig. 2 along III-III direction;
Fig. 4 is a partial sectional view of an electronic device according to embodiments of the present disclosure;
Fig. 5 is a another partial sectional view of an electronic device according to embodiments of the present disclosure;
Fig. 6 is a plan view of an electronic device according to embodiments of the present disclosure;
Fig. 7 is another plan view of an electronic device according to embodiments of the present disclosure;
Fig. 8 is yet another plan view of an electronic device according to embodiments of the present disclosure;
Fig. 9 is a further plan view of an electronic device according to embodiments of the present disclosure;
Fig. 10 is a further plan view of an electronic device according to embodiments of the present disclosure;
Fig. 11 is a sectional view of an electronic device according to embodiments of the present disclosure;
Fig. 12 is a further plan view of an electronic device according to embodiments of the present disclosure;
Fig. 13 is a flow diagram of a manufacturing method of an electronic device according to the present disclosure;
Fig. 14 is a flow diagram of a manufacturing method of an electronic device according to the present disclosure.

### DETAILED DESCRIPTION

Embodiments of the present disclosure will be described in detail and examples of the embodiments will be illustrated in the accompanying drawing. The same or similar elements and the elements having same or similar functions are denoted by like reference numerals throughout the descriptions.

Electronic apparatus such as a mobile phone or a tablet computer or the like usually detect a distance between the electronic apparatus and a user by having an infrared sensor installed. In the case of the mobile phone, the infrared sensor is provided in an upper area of the mobile phone. When the user makes a voice call or performs related operations, the mobile phone is close to the head, the infrared sensor feeds distance information back to a processor, and the processor executes corresponding instructions, such as turning off light of the display screen component. In related art, it is required to provide corresponding hole in a housing for emitting and receiving infrared light signal when the infrared sensor is provided in the electronic apparatus. With the development of electronic apparatus, people have higher and higher requirements for the appearance and operation experience of the mobile phone. The mobile phone has developed toward a trend of a full screen. An ultra-narrow bezel forms between the housing and a display screen assembly in the full-screen mobile phone. Since a width of the ultra-narrow bezel is too small, there may not be enough space to provide the hole, overall strength of the bezel is reduced even if the hole is provided, and then reliability of the electronic apparatus is relatively.

The embodiments of the present disclosure provide an electronic device and a manufacturing method for the electronic device.

An electronic device according to embodiments of the present disclosure includes: a display screen, the display screen including a display area and a non-display area surrounding the display area, and the display screen including a first surface and a second surface opposite the first surface; a light sensor arranged adjacent to the second surface and opposite to the display area; a light guiding element arranged adjacent to the second surface, the light guiding element being configured to transmit light, penetrating the non-display area from the first surface, to the light sensor.

The manufacturing method for the electronic device according to embodiments of the present disclosure includes following operations:
providing a display screen, the display screen including a display area and a non-display area surrounding the display area, and the display screen including a first surface and a second surface opposite to the first surface;
providing a light sensor and arranging the light sensor adjacent to the second surface and opposite to the display area; and
providing a light guiding element;
arranging the light guiding element adjacent to the second surface and enabling the light guiding element to guide the light, penetrating the non-display area from the first surface, to the light sensor.

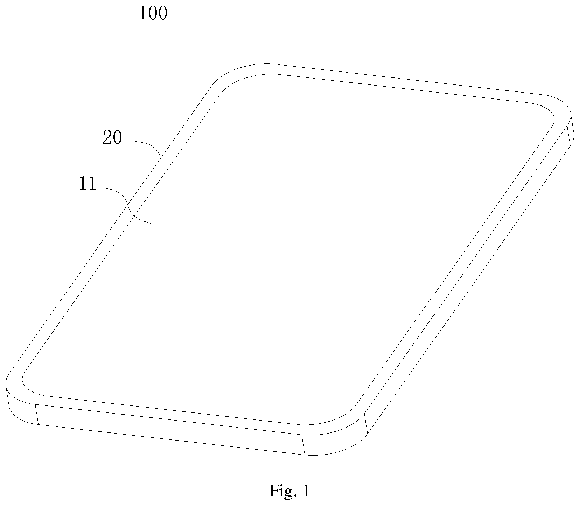

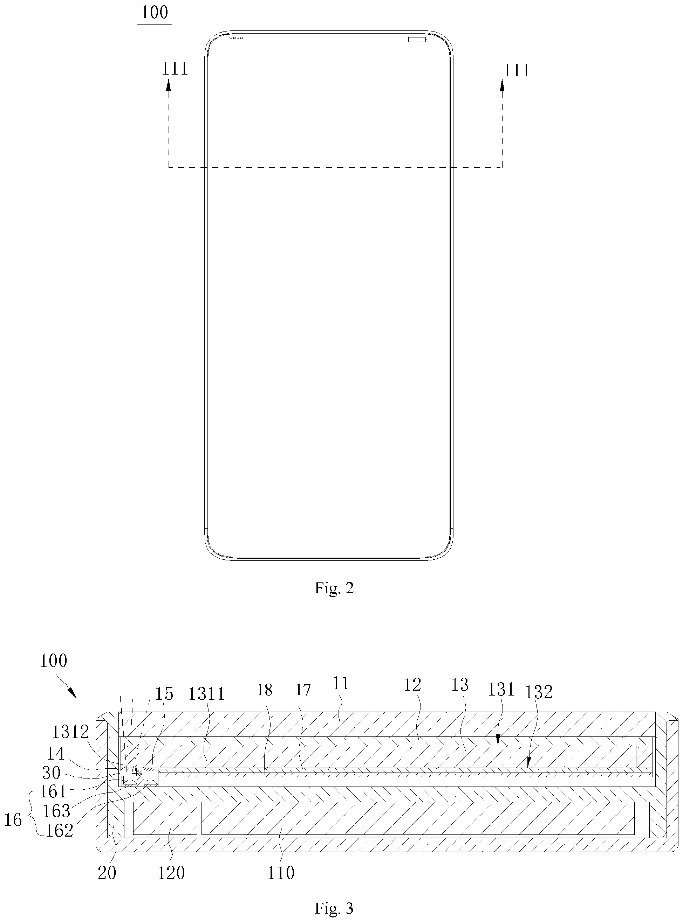

Referring to fig. 1 and fig. 2, embodiments of the present disclosure provide the electronic device 100 and a housing 20. The electronic device 100 can be a mobile phone or a tablet computer or the like. The electronic device 100 according to embodiments of the present disclosure is illustrated by taking the mobile phone as an example. Certainly, the electronic device 100 can also be other specific forms, which are not limited herein.

Referring to fig. 3, the electronic device 100 includes a display screen 13, an infrared sensor 16 and a light blocking element 30. The display screen 13 includes a display area 1311 and a non-display area 1312, and the non-display area 1312 surrounds the display area 1311. The infrared sensor 16 is located below the display screen 13 and includes an emitter 161 and a receiver 162, and the emitter 161 is configured to emit infrared light. For example, the emitter 161 emits the infrared light through the non-display area 1312. The receiver 162 is configured to receive the infrared light. For example, the receiver 162 receives the infrared light through the display area 1311. The light blocking element 30 is disposed between the emitter 161 and the display area 1311, and the light blocking element 30 is configured to block the infrared light emitted from the emitter 161 from entering into the display area 1311.

It could be understood that the display screen 13 includes an upper surface 131 (as an example for a first surface of the display screen) and a lower surface 132 (as an example for a second surface of the display screen), and the display screen 13 is used for luminescence display through the upper surface 131. The display screen 13 is light permeable so that the infrared light emitted by the emitter 161 can penetrate the display screen 13, and similarly, the reflected infrared light can be received by the receiver 162 through the display screen 13.

The emitter 161 is configured to emit the infrared light. When the emitted infrared light meets barriers in a detection direction, a part of the infrared light is reflected back and received by the receiver 162. By calculating a time between the emission and return-by-reflection of the infrared light by means of a processor, a distance between the electronic device 100 and the barriers can be determined and adjusted. In an example, when a user answers or makes a call, the electronic device 100 approaches a head, the emitter 161 emits the infrared light, and the receiver 162 receives the infrared light reflected by the head, by calculating the time between the emission and return-by-reflection of the infrared light by means of the processor, corresponding commands are sent to control the backlight of the screen to be turned off. When the electronic device 100 is away from the head, the processor performs the calculation and sends commands according to the feedback data again, and the screen backlight is reopened. Thus, not only the user's misoperation is prevented, but also the power of the mobile phone is saved.

As the emitter 161 has a certain emission angle, even though the emitter 161 is located outside the display area 1311, it cannot be guaranteed that the infrared light emitted by the emitter 161 doesn't enter the display area 1311. Thus, the light blocking element 30 blocks the infrared light emitted by the emitter 161 from entering the display area 1311, preventing the infrared light from causing bad influence on photoelectric elements in the display area 1311. In an example, the light blocking element 30 is foam. Certainly, the light blocking element 30 can be other light proof material such as plastic.

In the electronic device 100, the receiver 162 serves as an input element of the electronic device 100. The receiver 162 can receive infrared signal and input the signal to the electronic device 100. The display screen 13 serves as an output element of the electronic device 100, the display screen 13 can output display content outside the display screen 13 so as to allow the user to obtain corresponding information.

The housing 20 is configured to accommodate the electronic device 100 so as to protect electronic device 100. By arranging the electronic device 100 in the housing 20, the electronic device 100 is surrounded by the housing 20, thus preventing outside factors from damaging inside elements of the electronic device 100 directly. The housing 20 can be formed by machining aluminum alloy by means of CNC machined tool, and can also be injection-molded with polycarbonate (PC) or PC+ABS material.

At mentioned above, in the electronic device 100 according to embodiments of the present disclosure, the display screen 13 allows the infrared sensor 16 to be arranged below the display screen 13 so as to guarantee full-screen effect of the electronic device 100. In addition, an orthographic projection of the emitter 161 of the infrared sensor 16 in the lower surface 132 of the display screen 13 is located outside the display area 1311 and the light blocking element 30 blocks the infrared light from entering the display area 1311, which can prevent the infrared light emitted by the emitter 161 from influencing operation stability of TFT of the display area 1311, so that the display screen 13 and the infrared sensor 16 can realize respective functions without interfering each other.

Specifically, the electronic device 100 further includes a battery 110 and a main circuit board 120. The battery 110 and the main circuit board 120 are disposed at a same side of the housing 20, and the battery 110 and the display screen 13 are disposed at two opposite sides of the housing 20. The battery 110 is used for providing electric energy for the electronic device 100, and the main circuit board 120 is configured to control operation state of the electronic device 100, for example, the main circuit board 120 controls the display screen 13 to play video content.

In some embodiments, the display screen 13 includes OLED screen.

Specifically, Organic Light-Emitting Diode (OLED) screen has better light transparency and is permeable to visible light and infrared light. Thus, the OLED screen does not affect the infrared sensor transmitting and receiving the infrared light while displaying content and effect. The display screen 13 can also adopt a Micro LED screen, and the Micro LED screen also has good light transmittance to the visible light and the infrared light. Certainly, these display screens are merely exemplary and the embodiments of the present disclosure are not limited thereto.

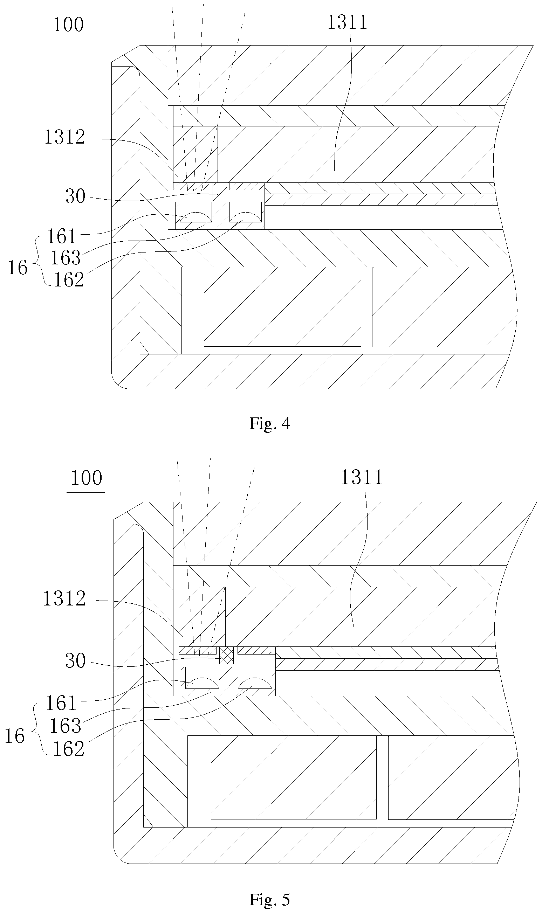

Referring to fig. 4, in some embodiments, the light blocking element 30 is attached and fixed to a joint of the display area 1311 and the non-display area 1312. Thus, a fixed method of the light blocking element 30 can be achieved easily, so that the electronic device 100 can be manufactured easily. In an example, during the fixation of the light blocking element 30 to the lower surface 132 of the display screen 13, a double-sided tape can be attached to one surface of the light blocking element 30, and the light blocking element 30 is attached and fixed to the joint of the display area 1311 and the non-display area 1312 through the double-sided tape.

Referring to fig. 3, in some embodiments, the infrared sensor 16 includes an encapsulation body 163 encapsulating the emitter 161 and the receiver 162. The light blocking element 30 is fixed to the encapsulation body 163 and located between the emitter 161 and the receiver 162. Thus, the light blocking element 30 is installed and fixed, which makes it convenient to integrate the infrared sensor 16 and the light blocking element 30 as a whole so as to be fitted with the display screen 13.

In some embodiments, the light blocking element 30 is soft material, and the light blocking element 30 is abutted against the lower surface 132. Thus, the light blocking element 30 has better light blocking effect, and it is guaranteed that the infrared light emitted by the emitter 161 cannot enter the display area 1311. In addition, it makes the infrared sensor 16 to be fitted with the display screen 13 in a more compact structure.

Referring to fig. 5, in some embodiments, the light blocking element 30 and the encapsulation body 163 are integral structures. Thus, the light blocking element 30 can be made of same material as the encapsulation body 163, the light blocking element 30 can be formed while manufacturing the infrared sensor 16, which can reduce an amount of parts of the electronic device 100 so as to improve assembly efficiency of the electronic device 100.

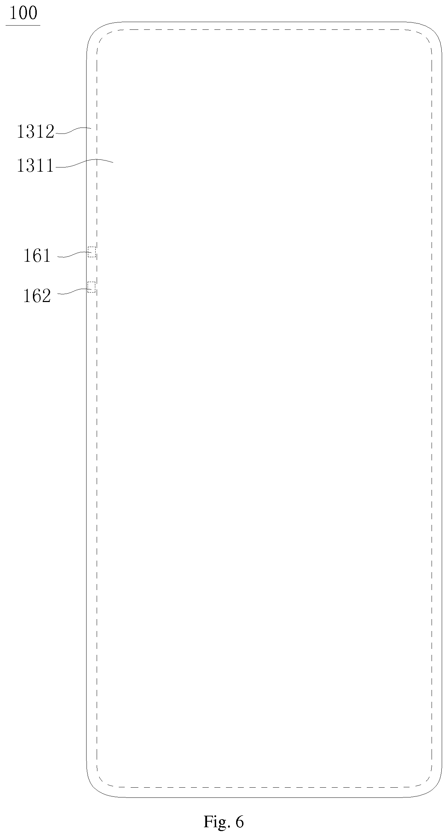

In some embodiments, an orthographic projection of the receiver 162 in the lower surface 132 is located in the display area 1311, and the receiver 162 is configured to receive the infrared light penetrating the display area 1311. Thus, there is enough space to arrange the receiver 162. Certainly, in some embodiments, the orthographic projection of the receiver 162 in the lower surface 132 can also be located at a position corresponding to the non-display area 1312, as illustrated in fig. 6.

Referring to fig. 3, in some embodiments, the electronic device 100 further includes a touch layer 12 and a cover plate 11. The cover plate 11 is formed on the touch layer 12, the touch layer 12 is disposed to the display screen 13, the upper surface 131 of the display screen 13 faces the touch layer 12, and the touch layer 12 and the cover plate 11 both have light transmittance to the visible light and the infrared light of more than 90%.

Specifically, the touch layer 12 is mainly used for receiving input signal generated when the user touches the touch layer 12 and transmitting the input signal to the circuit board for data processing, so as to obtain a specific position where the user touches the touch layer 12. The touch layer 12 can be attached to the display screen 13 by using In-Cell or On-Cell bonding technology, which can effectively reduce the weight of the display screen and reduce the overall thickness of the display screen. In addition, the cover plate 11 is disposed to the touch layer 12, which can effectively protect the touch layer 12 and its internal structures, preventing external forces from damaging the touch layer 12 and the display screen 13. The cover plate 11 and the touch layer 12 both have light transmittance to the visible light and the infrared light of more than 90%, which is not only beneficial for the display screen 13 to better display the content and effect, but also convenient for the infrared sensor 16 arranged below the display screen 13 to emit and receive the infrared light stably, guaranteeing the normal operation of the infrared sensor 16.

In some embodiments, the display screen 13 is used for luminescence display through the display area 1311, and an area ratio of the display area 1311 to the cover plate 11 is greater than 90%. For example, the area ratio of the display area 1311 to the cover plate 11 is values such as 95%, 96% or the like.

Specifically, by setting the ratio of the display area 1311 to the cover plate 11, when the cover plate 11 is attached to the display screen 13, the display area 1311 can display the content and effect with a larger size and area, which not only improves the user experience, but also effectively increase the screen-to-body-ratio of the electronic device 100, thus realizing full-screen effect. The non-display area 1312 can also be used to block other components and metal lines below the display screen 13, so that the appearance of the product remains consistent. The non-display area 1312 can enhance the optical density of the display screen 13 by printing ink, which also builds up good visual effect while ensuring the function of light blocking.

Referring to fig. 3, in some embodiments, the electronic device 100 further includes a first coating layer 14, the first coating layer 14 is coated onto the lower surface 132 and covers the emitter 161. The first coating layer 14 is configured to be permeable to the infrared light and intercept visible light, and the emitter 161 is configured to emit the infrared light through the first coating layer 14.

Specifically, during the technique assembly, the installation of the emitter 161 usually requires assembling clearance to be reserved, which causes that a gap appears between the emitter 161 and other elements, the visible light enters through the gap, and light leak phenomenon appears. Thus, in a stack direction of the emitter 161 and the display screen 13, an area of an orthographic projection of the first coating layer 14 in the lower surface 132 covers an area of an orthographic projection of the emitter 161 in the lower surface 132, so that the first coating layer 14 can be allowed to fully block the emitter 161 without influencing the normal operation of the emitter 161, realizing the effect that the emitter 161 is invisible when the electronic device 100 is looked from outside.

The first coating layer 14 is permeable to the infrared light, so that when the emitter 161 emits the infrared light outside for detection, the infrared light has smaller intensity attenuation when penetrating the first coating layer 14, or the attenuation degree doesn't cause influence on the detection process, so that the normal operation of the emitter 161 is guaranteed. The first coating layer 14 intercepts the visible light to make the visible light to be not able to pass through the first coating layer 14, and the emitter 161 is blocked visually, thus realizing the effect that the emitter 161 is invisible when the electronic device 100 is looked outside.

In some embodiments, the infrared sensor 16 includes a proximity sensor, the emitter 161 is configured to emit the infrared light through the display area 1311 and the non-display area 1312, and the receiver 162 is configured to receive the infrared light reflected by objects so as to detect a distance between the object and the upper surface 131.

Specifically, in an example, when the user answers or makes a call, the electronic device 100 approaches the head, the emitter 161 emits the infrared light, and the receiver 162 receives the infrared light reflected back, the processor calculates the time between the emission and return-by-reflection of the infrared light, and sends corresponding commands to control the backlight of the screen to be turned off. When the electronic device 100 is away from the head, the processor performs the calculation and sends commands according to the feedback data again, and the screen backlight is reopened. Thus, not only the user's misoperation is prevented, but also the power of the mobile phone is saved.

In some embodiments, the first coating layer 14 includes IR ink, the IR ink has a light transmittance to the infrared light of more than 85%, and a light transmittance to the visible light of less than 6%. The IR ink is permeable to the infrared light with a wave length of 850nm-940nm.

Specifically, as the IR ink has the characteristic of low light transmittance to the visible light, when the electronic device 100 is looked outside, the emitter 161 arranged below the first coating layer 14 cannot be viewed based on human eye vision. Meanwhile, the IR ink also has the characteristic of high light transmittance to the infrared light, so that the emitter 161 can emit the infrared light stably, guaranteeing the normal operation of the emitter 161.

Referring to fig. 6, in some embodiments, the emitter 161 and the receiver 162 are separated structures.

Specifically, as the emitter 161 and the receiver 162 are separated structures, when arranging the emitter 161 and the receiver 162, the emitter 161 and the receiver 162 can be arranged compactly or dispersedly, which is not only beneficial for the electronic device 100 to distribute spatial position of each element sufficiently and apply the emitter 161 and the receiver 162 of various shapes, but also beneficial for the emitter 161 and the receiver 162 to spare possible positions for other elements of the electronic device 100.

In an example, the separated emitter 161 and receiver 162 are both disposed below a length edge of the non-display area 1312, as illustrated in fig. 6.

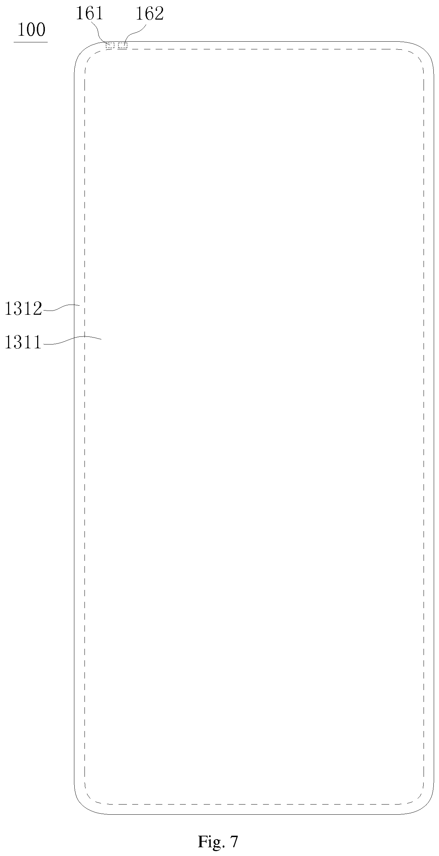

In another example, the separated emitter 161 and receiver 162 are both arrange below a position corresponding to a corner of the non-display area 1312, as illustrated in fig. 7.

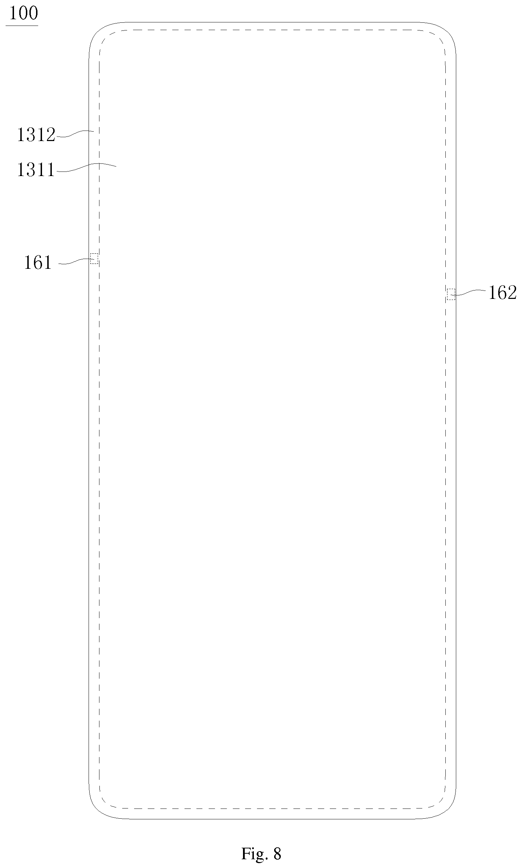

In yet another example, the separated emitter 161 and receiver 162 are arranged below two length edges of the non-display area 1312 respectively, as illustrated in fig. 8.

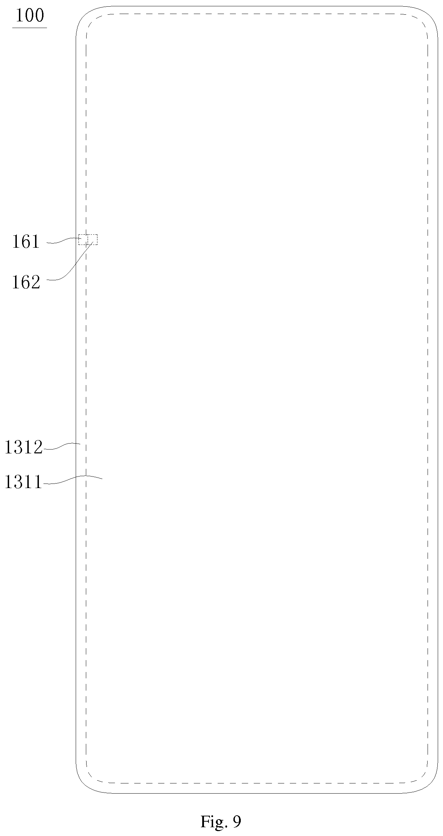

Referring to fig. 9, in some embodiments, the emitter 161 and the receiver 162 are integral structures.

Specifically, the emitter 161 and the receiver 162 are integral structures, which can omit the line connection between the separated structures, which is beneficial to reduce the line technical process, improve the production efficiency of the product, and reduce the production cost.

In the example illustrated in fig. 9, in the infrared sensor 16, the emitter 161 is located at a position corresponding to the non-display area 1312, and the receiver 162 is located at a position corresponding to the display area 1311.

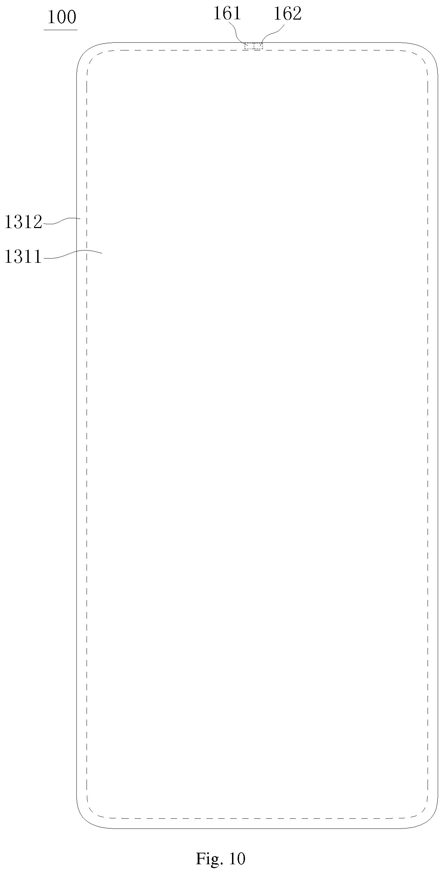

In the example in fig. 10, the emitter 161 and the receiver 162 in integral structures are both disposed at a position corresponding to a width edge of the non-display area 1312.

Referring to fig. 3 again, in some embodiments, the electronic device 100 further includes a second coating layer 15 being coated onto the lower surface 132 and covering the receiver 162, the second coating layer 15 is configured to be permeable to the infrared light and intercept the visible light, and the receiver 162 is configured to receive the infrared light through the display area 1311 and the second coating layer 15.

Specifically, during the technique assembly, the installation of the receiver 162 usually requires assembling clearance to be reserved, which causes that a gap appears between the receiver 162 and other elements, the visible light enters through the gap, and light leak phenomenon appears. Thus, in a stack direction of the receiver 162 and the display screen 13, an area of an orthographic projection of the second coating layer 15 in the lower surface 132 covers an area of an orthographic projection of the receiver 162 in the lower surface 132, so that the second coating layer 15 can be allowed to fully block the receiver 162 without influencing the normal operation of the receiver 162, realizing the effect that the receiver 162 is invisible when the electronic device 100 is looked from outside.

The second coating layer 15 can also adopt the IR ink. As the IR ink has the characteristic of the low light transmittance to the visible light, when the electronic device 100 is looked outside, the receiver 162 arranged below the second coating layer 15 cannot be viewed based on human eye vision. Meanwhile, the IR ink also has the characteristic of high light transmittance to the infrared light, so that the receiver 162 can receive the infrared light stably, guaranteeing the normal operation of the receiver 162.

In some embodiments, the electronic device 100 further includes a buffer layer 17 covering the lower surface 132 and avoiding the infrared sensor 16.

Specifically, the buffer layer 17 is used to mitigate impact and shock to protect the touch layer 12 and the display screen 13 and their internal structures, so as to prevent the display screen 13 from being damaged by being subject to external impact. The buffer layer 17 can be made of foam, or foam plastic or rubber or other soft material. Certainly, these cushioning materials are merely exemplary and the embodiments of the present disclosure are not limited thereto. In addition, the infrared sensor 16 is avoided when arranging the buffer layer 17 so as to prevent the buffer layer 17 from intercepting the signal reception by the infrared sensor 16, lest the infrared sensor 16 is affected in the process of receiving the infrared light.

In some embodiments, the electronic device 100 further includes a metal sheet 18 covering the buffer layer 17 and avoiding the infrared sensor 16.

Specifically, the metal sheet 18 is configured to shield electromagnetic interference and connect ground and has a function of diffusing temperature rise. The buffer layer 17 can be formed by cutting a metal material such as copper foil or aluminum foil. Certainly, these metal materials are merely exemplary and embodiments of the present disclosure are not limited thereto. In addition, the infrared sensor 16 is avoided when arranging the metal sheet 18 so as to prevent the metal sheet 18 from intercepting the signal reception by the infrared sensor 16, lest the infrared sensor 16 is affected in the process of receiving the infrared light.

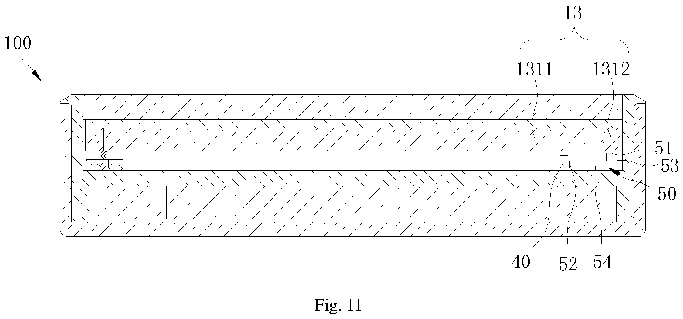

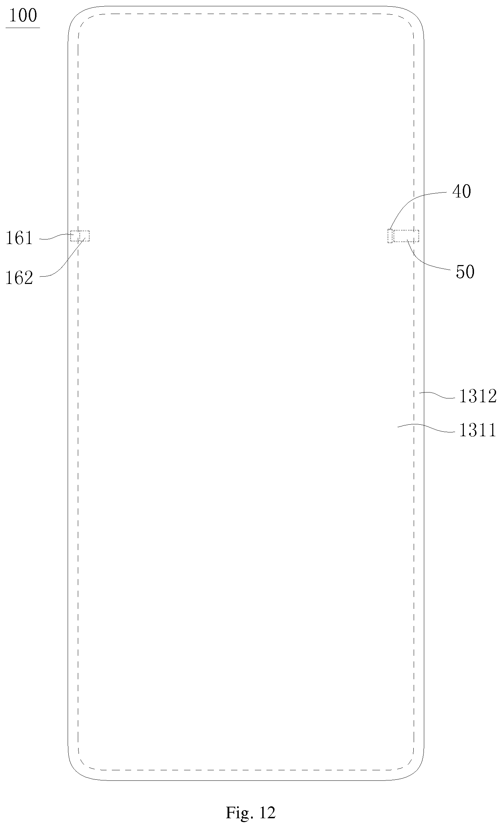

Referring to fig. 11 and fig. 12, in some embodiments, the electronic device 100 includes a light sensor 40 and a light guiding element 50, the light sensor 40 is disposed below the display area 1311, the light guiding element 50 is disposed below the display screen 13, and the light guiding element 50 is configured to guide the light penetrating the non-display area 1312 to the light sensor 40.

Thus, the light sensor 40 is arranged below the display area 1311 so as to ensure that the electronic device 100 realizes the full-screen effect. In addition, the light guiding element 50 guides the light to the light sensor 40 through the non-display area 1312, so that the light sensor 40 can sense and detect the ambient light intensity around the electronic device 100, thus preventing the light emitted from the display area 1311 from causing bad effect on the light sensor 40.

If the light sensor 40 is arranged below the display area 1311 and detects the ambient light intensity through the display area 1311, in this case, as a part of the light emitted from an organic light emitting layer of the display area 1311 is reflected downwards the display area 1311, the light sensor 40 detects the intensity of outside ambient light and intensity of the light generated by the display area 1311, so that the accuracy of the detection for the outside ambient light by the light sensor 40 is relatively low.

Specifically, the light guiding element 50 can be made of transparent light guiding material. For example, the material of the light guiding element 50 can be plastic or glass. The amount of the light guiding element 50 can be set according to specific requirements. For example, the amount of the light guiding element 50 can be one or two or the like. The light guiding element 50 includes a light incident end 51 and a light exit end 52, the light incident end 51 faces the non-display area 1312, the light exit end 52 faces the light sensor 40 so that the light guiding element 50 guides the visible light penetrating the non-display area 1312 to the light sensor 40.

When the light sensor 40 receives different light intensity, current of different intensity is generated so that the ambient light brightness is sensed. For example, when the user is in the sun, the ambient light is strong, the light sensor 40 feeds the ambient light intensity back to the processor, and the processor executes corresponding instructions to enhance the brightness of the display screen to adapt to the light intensity of the current environment, so that contents in the screen viewed by the user is more clear. When the user is in darker environment, the ambient light is weak, the light sensor 40 feeds the ambient light intensity back to the processor, and the processor executes corresponding instructions to lower the brightness of the display screen to adapt to the light intensity of in the current environment, so that the user does not feel glare when viewing the screen content, thus giving the user best visual effect. In this way, not only the user's vision is protected, but also the power of the mobile phone is saved and the function of further prolonging the service life of the battery is realized. Further, when the user uses the photographing function, the light sensor 40 can also be configured to adjust white balance.

In some embodiments, the light guiding element 50 includes a vertical portion 53 and a horizontal portion 54 connected with the vertical portion 53, the vertical portion 53 faces the non-display area 1312 directly, and the horizontal portion 54 bends towards the light sensor 40 at a bottom end of the vertical portion 53.

Thus, the light guiding element 50 forms substantially to be an L shape, so that the light sensor 40 can be arranged below the display area 1311 more easily. Certainly, in some embodiments, the light guiding element 50 can also form into other shapes such as an arc shape, as long as the light penetrating the non-display area 1312 can be guided to the light sensor 40.

In some embodiments, a light incident direction of the light guiding element 50 is perpendicular to the non-display area 1312, and/or a light exit direction of the light guiding element 50 is perpendicular to the light sensor 40.

That is, in some embodiments, the light incident direction of the light guiding element 50 is perpendicular to the non-display area 1312. Or, in some embodiments, the light exit direction of the light guiding element 50 is perpendicular to the light sensor 40. Or, in some embodiments, the light incident direction of the light guiding element 50 is perpendicular to the non-display area 1312 and the light exit direction of the light guiding element 50 is perpendicular to the light sensor 40.

Thus, most of the visible light penetrating the non-display area 1312 passes through the light guiding element 50 and reaches the light sensor 40, so that the accuracy for detecting the ambient light by means of the light sensor 40 is relatively high.

In some embodiments, a peripheral surface of the light guiding element 50 is coated with a black coating. Thus, it is possible to prevent the visible light from being emitted through the peripheral surface of the light guiding element 50 and the accuracy of the ambient light detection by the light sensor 40 is reduced.

In some embodiments, a light sensing face of the light sensor 40 is opposite to the display area 1311. Thus, it is possible to prevent the light sensor 40 from being subjected to the visible light emitted from the display area 1311 and causing a bad effect.

It is to be noted that the light sending face of the light sensor 40 being opposite to the display area 1311 means that an included angle between the light sensing face of the light sensor 40 and the lower surface of the display area 1311 is larger than or equal to 90 degree and less than or equal to 180 degree so as to prevent the light generated in the display area 1311 from being transmitted to the light sensing face of the light sensor 40.

In some embodiments, the light sensor 40 includes an ambient light sensor, the ambient light sensor is configured to sense ambient light, and the processor is configured to adjust brightness of the display screen according to light intensity sensed by the ambient light sensor.

Specifically, when the user is in the sun, the ambient light is strong, the ambient light receiver feeds the ambient light intensity back to the processor, and the processor executes corresponding instructions to enhance the brightness of the display screen to adapt to the light intensity of the current environment, so that contents in the screen viewed by the user is more clear. When the user is in darker environment, the ambient light is weak, the ambient light receiver feeds the ambient light intensity back to the processor, and the processor executes corresponding instructions to lower the brightness of the display screen to adapt to the light intensity of in the current environment, so that the user does not feel glare when viewing the screen content, thus giving the user best visual effect. In this way, not only the user's vision is protected, but also the power of the mobile phone is saved and the function of further prolonging the service life of the battery is realized.

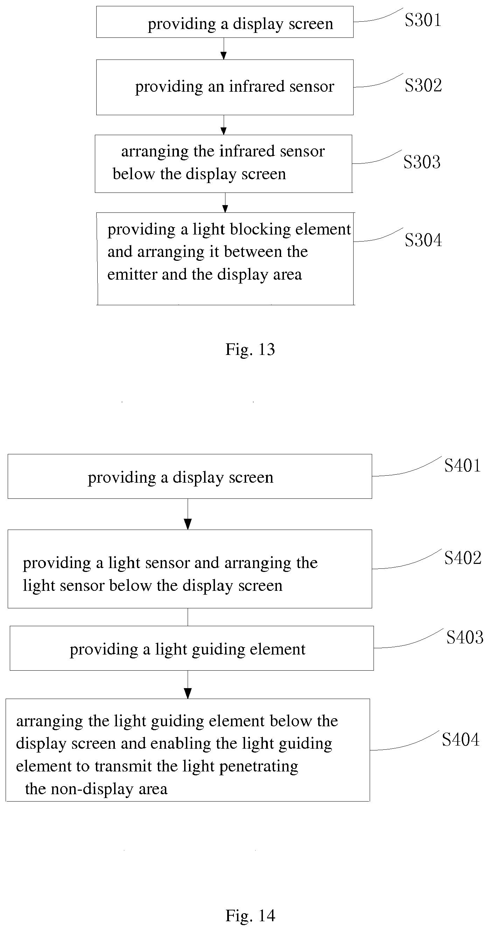

Referring to fig. 3 and fig. 13, embodiments of the present disclosure provide a manufacturing method for the electronic device 100, and the method includes the following operations at blocks S301 to S304.

At the block S301, a display screen 13 is provided. The display screen 13 includes a display area 1311 and a non-display area 1312 surrounding the display area.

At the block S302, an infrared sensor 16 is provided. The infrared sensor 16 includes an emitter 161 configured to emit infrared light and a receiver 162 configured to receive the infrared light.

At the block S303, the infrared sensor 16 is arranged below the display screen 13 so that the emitter 161 is located in the non-display area 1312.

At the block S304, a light blocking element 30 is provided and arranged between the emitter 161 and the display area 1311, and the light blocking element 30 is configured to block the infrared light emitted from the emitter 161 from entering the display area 1311.

Specifically, the electronic device 100 adopts the display screen 13, the infrared sensor 16 can be arranged below the display screen 13 in the case of the full-screen. In addition, it is possible to prevent the infrared light emitted from the emitter 161 from influencing operation stability of TFT of the display area 1311 by arranging the emitter 161 of the light sensor 16 in the non-display area 1312, so as to allow the display screen 13 and the infrared sensor 16 to realize their respective functions without interfering each other. The display screen 13 can be an Organic Light-Emitting Diode (OLED) screen, and the OLED screen has better optical transparency and is permeable to visible light and infrared light. Thus, the OLED screen doesn't influence the infrared sensor in emitting and receiving the infrared light. The display screen 13 can also adopt the Micro LED screen, and the Micro LED screen also has good light transmittance to the visible light and the infrared light. Certainly, these display screens are merely exemplary and the embodiments of the present disclosure are not limited thereto. In addition, the upper surface 131 of the display screen 13 is configured to be permeable to visible light so as to display content and effect on one aspect, and to be permeable to the infrared light so as to allow the infrared sensor 16 to emit and receive the infrared light normally.

In some embodiments, the manufacturing method for the electronic device 100 further includes operations of providing the touch layer 12 to the display screen 13 and providing the cover plate 11 to the touch layer 12.

Specifically, the touch layer 12 is mainly used for receiving input signal generated when the user touches the touch layer 12 and transmitting the input signal to the circuit board for data processing, so as to obtain a specific position where the user touches the touch layer 12. The touch layer 12 can be attached to the display screen 13 by using In-Cell or On-Cell bonding technology, which can effectively reduce the weight of the display screen and reduce the overall thickness of the display screen. In addition, the cover plate 11 is disposed to the touch layer 12, which can protect the touch layer 12 and its internal structures, preventing external forces from damaging the touch layer 12 directly.

In some embodiments, before the operation at the block S303, the manufacturing method for the electronic device 100 further includes an operation of applying the lower surface 132 with the first coating layer 14.

Specifically, at the block S303, the infrared sensor 16 is arranged below the display screen 13 so as to enable the first coating layer 14 to cover the emitter 161, and the emitter 161 is configured to emit the infrared light through the first coating layer 14.

Specifically, the first coating layer 14 may adopt IR ink. As the IR ink has the characteristic of a low light transmittance to the visible light, when the electronic device 100 is looked outside, the emitter 161 arranged below the first coating layer 14 cannot be viewed based on human eye vision. Meanwhile, the IR ink also has the characteristic of high light transmittance to the infrared light, so that the emitter 161 can emit the infrared light stably, guaranteeing the normal operation of the emitter 161.

Referring to fig. 11 and fig. 14, in some embodiments, embodiments of the present disclosure provide a manufacturing method for the electronic device 100, which includes the following operations at blocks S401 to S404.

At the block S401, a display screen 13 is provided. The display screen 13 includes a display area 1311 and a non-display area 1312 surrounding the display area 1311.

At the block S402, a light sensor 40 is provided and the light sensor 40 is arranged below the display screen 13.

At the block S403, a light guiding element 50 is provided.

At the block S404, the light guiding element 50 is arranged below the display screen 13 and enabled to guide the light penetrating the non-display area 1312 to the light sensor 40.

## Claims

1. An electronic device (100), comprising:
a display screen (13) comprising a front surface used for luminescence display and a back surface, and the display screen (13) comprising a display area (1311) and a non-display area (1312) surrounding the display area (1311);
a light sensor (40) arranged below the back surface and opposite the display area (1311); and
a light guiding element (50) arranged below the back surface and being configured to transmit light, penetrating the non-display area (1312) from the front surface, to the light sensor (40);
wherein the light guiding element (50) comprises a vertical portion (53) perpendicular to the back surface and a horizontal portion (54) connected to the vertical portion (53), the vertical portion (53) is located opposite the non-display area (1312), and the horizontal portion (54) extends from a bottom end of the vertical portion (53) towards the light sensor (40); a light incident direction of the light guiding element (50) is perpendicular to the non-display area (1312), and/or a light exit direction of the light guiding element (50) is perpendicular to a light sensing face of the light sensor (40);
**characterized in that** an arrangement of the light sensor (40) ranges between a first state where the light sensing face is perpendicular to the back surface and a second state where the light sensing face is away from the back surface so that an included angle between the light sensing face and the back surface ranges from 90°to 180°.

2. The electronic device (100) according to claim 1, wherein a peripheral surface of the light guiding element (50) is coated with a black coating.

3. The electronic device (100) according to any one of claims 1 to 2, wherein the electronic device (100) comprises an infrared sensor (16) and a light blocking element (30), the infrared sensor (16) comprises an emitter (161) and a receiver (162), the emitter (161) is located adjacent to the back surface and opposite to the non-display area (1312), the emitter (161) is configured to emit infrared light, and the receiver (162) is configured to receive (162) the infrared light; the light blocking element (30) is arranged between the emitter (161) and the display area (1311), and the light blocking element (30) is configured to block the infrared light emitted from the emitter (161) from entering the display area (1311).

4. The electronic device (100) according to claim 3, wherein the infrared sensor (16) comprises an encapsulation body (163) encapsulating the emitter (161) and the receiver (162), and the light blocking element (30) is fixed to the encapsulation body (163) and located between the emitter (161) and the receiver (162).

5. The electronic device (100) according to claim 3 or 4, wherein the light blocking element (30) is abutted against the back surface.

6. The electronic device (100) according to claim 4 or 5, wherein the light blocking element (30) and the encapsulation body (163) form an integral structure.

7. The electronic device (100) according to any one of claims 3 to 6, further comprising a first coating layer (14), the first coating layer (14) being coated on the back surface and covering the emitter (161), the first coating layer (14) being configured to be permeable to the infrared light and intercept visible light, and the emitter (161) being configured to emit the infrared light through the first coating layer (14).

8. The electronic device (100) according to claim 7, wherein the infrared sensor (16) is a proximity sensor, the emitter (161) is configured to emit the infrared light through the first coating layer (14), and the receiver (162) is configured to receive the infrared light reflected by an object so as to detect a distance between the object and the front surface.

9. The electronic device (100) according to any one of claims 3 to 8, further comprising a second coating layer (15) being coated on the back surface and covering the receiver (162), the second coating layer (15) being configured to be permeable to the infrared light and intercept visible light, and the receiver (162) being configured to receive the infrared light through the display area (1311) and the second coating layer (15).

10. The electronic device (100) according to any one of claims 1 to 9, further comprising a buffer layer (17) covering the back surface.

11. The electronic device (100) according to claim 10, further comprising a metal sheet (18) covering the buffer layer (17).

12. A manufacturing method for an electronic device (100), comprising following operations:
providing a display screen (13), the display screen (13) comprising a display area (1311) and a non-display area (1312) surrounding the display area (1311), and the display screen (13) comprising a front surface used for luminescence display and a back surface;
providing a light sensor (40) and arranging the light sensor (40) below the back surface and opposite the display area (1311); and
providing a light guiding element (50);
arranging the light guiding element (50) below the back surface and enabling the light guiding element (50) to guide light, penetrating the non-display area (1312) from the front surface, to the light sensor (40);
wherein the light guiding element (50) comprises a vertical portion (53) perpendicular to the back surface and a horizontal portion (54) connected to the vertical portion (53), the vertical portion (53) is located opposite the non-display area (1312), and the horizontal portion (54) extends from a bottom end of the vertical portion (53) towards the light sensor (40); a light incident direction of the light guiding element (50) is perpendicular to the non-display area (1312), and/or a light exit direction of the light guiding element (50) is perpendicular to a light sensing face of the light sensor (40);
**characterized in that** an arrangement of the light sensor (40) ranges between a first state where the light sensing face is perpendicular to the back surface and a second state where the light sensing face is away from the back surface so that an included angle between the light sensing face and the back surface ranges from 90°to 180°.

## Patentansprüche

1. Elektronisches Gerät (100), umfassend:
einen Anzeigebildschirm (13), der eine für eine Lumineszenzanzeige verwendete Vorderfläche und eine Rückfläche umfasst, und wobei der Anzeigebildschirm (13) einen Anzeigebereich (1311) und einen den Anzeigebereich (1311) umgebenden Nicht-Anzeigebereich (1312) umfasst;
einen Lichtsensor (40), der unter der Rückfläche und gegenüber dem Anzeigebereich (1311) angeordnet ist; und
ein Lichtleitelement (50), das unter der Rückfläche angeordnet und konfiguriert ist, um Licht, das von der Vorderfläche in den Nicht-Anzeigebereich (1312) eindringt, an den Lichtsensor (40) zu übertragen;
wobei das Lichtleitelement (50) einen vertikalen Abschnitt (53) senkrecht zu der Rückfläche und einen horizontalen Abschnitt (54), der mit dem vertikalen Abschnitt (53) verbunden ist, umfasst, wobei der vertikale Abschnitt (53) gegenüber dem Nicht-Anzeigebereich (1312) angeordnet ist und der horizontale Abschnitt (54) sich von einem unteren Ende des vertikalen Abschnitts (53) zu dem Lichtsensor (40) hin erstreckt; wobei eine Lichteinfallsrichtung des Lichtleitelements (50) senkrecht zu dem Nicht-Anzeigebereich (1312) ist und/oder eine Lichtaustrittsrichtung des Lichtleitelements (50) senkrecht zu einer Lichterfassungsseite des Lichtsensors (40) ist;
**dadurch gekennzeichnet, dass** eine Anordnung des Lichtsensors (40) in einem Bereich zwischen einem ersten Zustand, bei dem die Lichterfassungsseite senkrecht zu der Rückfläche ist, und einem zweiten Zustand, bei dem die Lichterfassungsseite von der Rückfläche entfernt ist, liegt, so dass ein eingeschlossener Winkel zwischen der Lichterfassungsseite und der Rückfläche von 90° bis 180° reicht.

2. Elektronisches Gerät (100) nach Anspruch 1, wobei eine Umfangsfläche des Lichtleitelements (50) mit einer schwarzen Beschichtung beschichtet ist.

3. Elektronisches Gerät (100) nach einem der Ansprüche 1 bis 2, wobei das elektronische Gerät (100) einen Infrarotsensor (16) und ein Lichtsperrelement (30) umfasst, der Infrarotsensor (16) einen Sender (161) und einen Empfänger (162) umfasst, der Sender (161) an die Rückfläche angrenzend und gegenüber dem Nicht-Anzeigebereich (1312) angeordnet ist, der Sender (161) konfiguriert ist, um Infrarotlicht auszusenden, und der Empfänger (162) konfiguriert ist, um das Infrarotlicht zu empfangen (162);
das Lichtsperrelement (30) zwischen dem Sender (161) und dem Anzeigebereich (1311) angeordnet ist und das Lichtsperrelement (30) konfiguriert ist, um das von dem Sender (161) ausgesandte Infrarotlicht daran zu hindern, in den Anzeigebereich (1311) einzutreten.

4. Elektronisches Gerät (100) nach Anspruch 3, wobei der Infrarotsensor (16) einen Verkapselungskörper (163) umfasst, der den Sender (161) und den Empfänger (162) einkapselt, und das Lichtsperrelement (30) an dem Verkapselungskörper (163) befestigt und zwischen dem Sender (161) und dem Empfänger (162) angeordnet ist.

5. Elektronisches Gerät (100) nach Anspruch 3 oder 4, wobei das Lichtsperrelement (30) an der Rückfläche anliegt.

6. Elektronisches Gerät (100) nach Anspruch 4 oder 5, wobei das Lichtsperrelement (30) und der Verkapselungskörper (163) eine Struktur aus einem Stück bilden.

7. Elektronisches Gerät (100) nach einem der Ansprüche 3 bis 6, das ferner eine erste Überzugsschicht (14) umfasst, wobei die erste Überzugsschicht (14) auf der Rückfläche beschichtet ist und den Sender (161) bedeckt, wobei die erste Überzugsschicht (14) so konfiguriert ist, dass sie für das Infrarotlicht durchlässig ist und sichtbares Licht abfängt, und der Sender (161) so konfiguriert ist, dass er das Infrarotlicht durch die erste Überzugsschicht (14) hindurch aussendet.

8. Elektronisches Gerät (100) nach Anspruch 7, wobei der Infrarotsensor (16) ein Näherungssensor ist, der Sender (161) konfiguriert ist, um das Infrarotlicht durch die erste Überzugsschicht (14) hindurch auszusenden, und der Empfänger (162) konfiguriert ist, um das von einem Objekt reflektierte Infrarotlicht zu empfangen, um einen Abstand zwischen dem Objekt und der Vorderfläche zu erfassen.

9. Elektronisches Gerät (100) nach einem der Ansprüche 3 bis 8, das ferner eine zweite Überzugsschicht (15) umfasst, die auf der Rückfläche beschichtet ist und den Empfänger (162) bedeckt, wobei die zweite Überzugsschicht (15) so konfiguriert ist, dass sie für das Infrarotlicht durchlässig ist und sichtbares Licht abfängt, und der Empfänger (162) so konfiguriert ist, dass er das Infrarotlicht durch den Anzeigebereich (1311) und die zweite Überzugsschicht (15) empfängt.

10. Elektronisches Gerät (100) nach einem der Ansprüche 1 bis 9, das ferner eine Pufferschicht (17) aufweist, die die Rückfläche bedeckt.

11. Elektronisches Gerät (100) nach Anspruch 10, das ferner ein Metallblech (18) umfasst, das die Pufferschicht (17) bedeckt.

12. Herstellungsverfahren für ein elektronisches Gerät (100), das folgende Operationen umfasst:
Bereitstellen eines Anzeigebildschirms (13), wobei der Anzeigebildschirm (13) einen Anzeigebereich (1311) und einen den Anzeigebereich (1311) umgebenden Nicht-Anzeigebereich (1312) umfasst, und der Anzeigebildschirm (13) eine für eine Lumineszenzanzeige verwendete Vorderfläche und eine Rückfläche umfasst;
Bereitstellen eines Lichtsensors (40) und Anordnen des Lichtsensors (40) unter der Rückfläche und gegenüber dem Anzeigebereich (1311); und
Bereitstellen eines Lichtleitelements (50);
Anordnen des Lichtleitelements (50) unter der Rückfläche und Ermöglichen, dass das Lichtleitelement (50) Licht, das den Nicht-Anzeigebereich (1312) von der Vorderfläche aus durchdringt, zu dem Lichtsensor (40) leitet;
wobei das Lichtleitelement (50) einen vertikalen Abschnitt (53) senkrecht zu der Rückfläche und einen horizontalen Abschnitt (54), der mit dem vertikalen Abschnitt (53) verbunden ist, umfasst, wobei der vertikale Abschnitt (53) gegenüber dem Nicht-Anzeigebereich (1312) angeordnet ist und der horizontale Abschnitt (54) sich von einem unteren Ende des vertikalen Abschnitts (53) zu dem Lichtsensor (40) hin erstreckt; wobei eine Lichteinfallsrichtung des Lichtleitelements (50) senkrecht zu dem Nicht-Anzeigebereich (1312) ist und/oder eine Lichtaustrittsrichtung des Lichtleitelements (50) senkrecht zu einer Lichterfassungsseite des Lichtsensors (40) ist;
**dadurch gekennzeichnet, dass** eine Anordnung des Lichtsensors (40) in einem Bereich zwischen einem ersten Zustand, bei dem die Lichterfassungsseite senkrecht zu der Rückfläche ist, und einem zweiten Zustand, bei dem die Lichterfassungsseite von der Rückfläche entfernt ist, liegt, so dass ein eingeschlossener Winkel zwischen der Lichterfassungsseite und der Rückfläche von 90° bis 180° reicht.

## Revendications

1. Dispositif électronique (100), comprenant :
un écran d'affichage (13) comprenant une surface avant utilisée pour l'affichage par luminescence et une surface arrière, et l'écran d'affichage (13) comprenant une zone d'affichage (1311) et une zone de non-affichage (1312) entourant la zone d'affichage (1311) ;
un capteur de lumière (40) disposé sous la surface arrière et à l'opposé de la zone d'affichage (1311) ; et
un élément de guidage de lumière (50) disposé sous la surface arrière et configuré pour transmettre la lumière, pénétrant dans la zone de non-affichage (1312) depuis la surface avant, vers le capteur de lumière (40) ;
dans lequel l'élément de guidage de lumière (50) comprend une partie verticale (53) perpendiculaire à la surface arrière et une partie horizontale (54) reliée à la partie verticale (53), la partie verticale (53) est située à l'opposé de la zone de non-affichage (1312) et la partie horizontale (54) s'étend depuis une extrémité inférieure de la partie verticale (53) vers le capteur de lumière (40) ; une direction d'incidence de lumière de l'élément de guidage de lumière (50) est perpendiculaire à la zone de non-affichage (1312) et/ou une direction de sortie de lumière de l'élément de guidage de lumière (50) est perpendiculaire à une face de détection de lumière du capteur de lumière (40) ;
**caractérisé en ce qu'**une disposition du capteur de lumière (40) se situe entre un premier état dans lequel la face de détection de lumière est perpendiculaire à la surface arrière et un deuxième état dans lequel la face de détection de lumière est éloignée de la surface arrière de sorte qu'un angle inclus entre la face de détection de lumière et la surface arrière se situe entre 90° et 180°.

2. Dispositif électronique (100) selon la revendication 1, dans lequel une surface périphérique de l'élément de guidage de lumière (50) est revêtue d'un revêtement noir.

3. Dispositif électronique (100) selon l'une quelconque des revendications 1 à 2, dans lequel le dispositif électronique (100) comprend un capteur infrarouge (16) et un élément de blocage de lumière (30), le capteur infrarouge (16) comprend un émetteur (161) et un récepteur (162), l'émetteur (161) est situé adjacent à la surface arrière et à l'opposé de la zone de non-affichage (1312), l'émetteur (161) est configuré pour émettre une lumière infrarouge et le récepteur (162) est configuré pour recevoir (162) la lumière infrarouge ; l'élément de blocage de lumière (30) est disposé entre l'émetteur (161) et la zone d'affichage (1311) et l'élément de blocage de lumière (30) est configuré pour empêcher la lumière infrarouge émise par l'émetteur (161) d'entrer dans la zone d'affichage (1311).

4. Dispositif électronique (100) selon la revendication 3, dans lequel le capteur infrarouge (16) comprend un corps d'encapsulation (163) encapsulant l'émetteur (161) et le récepteur (162), et l'élément de blocage de lumière (30) est fixé au corps d'encapsulation (163) et situé entre l'émetteur (161) et le récepteur (162).

5. Dispositif électronique (100) selon la revendication 3 ou 4, dans lequel l'élément de blocage de lumière (30) est en butée contre la surface arrière.

6. Dispositif électronique (100) selon la revendication 4 ou 5, dans lequel l'élément de blocage de lumière (30) et le corps d'encapsulation (163) forment une structure intégrée.

7. Dispositif électronique (100) selon l'une quelconque des revendications 3 à 6, comprenant en outre une première couche de revêtement (14), la première couche de revêtement (14) étant appliquée sur la surface arrière et recouvrant l'émetteur (161), la première couche de revêtement (14) étant configurée pour être perméable à la lumière infrarouge et intercepter la lumière visible, et l'émetteur (161) étant configuré pour émettre la lumière infrarouge à travers la première couche de revêtement (14).

8. Dispositif électronique (100) selon la revendication 7, dans lequel le capteur infrarouge (16) est un capteur de proximité, l'émetteur (161) est configuré pour émettre la lumière infrarouge à travers la première couche de revêtement (14) et le récepteur (162) est configuré pour recevoir la lumière infrarouge réfléchie par un objet afin de détecter une distance entre l'objet et la surface avant.

9. Dispositif électronique (100) selon l'une quelconque des revendications 3 à 8, comprenant en outre une deuxième couche de revêtement (15) appliquée sur la surface arrière et recouvrant le récepteur (162), la deuxième couche de revêtement (15) étant configurée pour être perméable à la lumière infrarouge et intercepter la lumière visible, et le récepteur (162) étant configuré pour recevoir la lumière infrarouge à travers la zone d'affichage (1311) et la deuxième couche de revêtement (15).

10. Dispositif électronique (100) selon l'une quelconque des revendications 1 à 9, comprenant en outre une couche tampon (17) recouvrant la surface arrière.

11. Dispositif électronique (100) selon la revendication 10, comprenant en outre une feuille de métal (18) recouvrant la couche tampon (17).

12. Procédé de fabrication d'un dispositif électronique (100), comprenant les opérations suivantes consistant à :
fournir un écran d'affichage (13), l'écran d'affichage (13) comprenant une zone d'affichage (1311) et une zone de non-affichage (1312) entourant la zone d'affichage (1311), et l'écran d'affichage (13) comprenant une surface avant utilisée pour l'affichage par luminescence et une surface arrière ;
fournir un capteur de lumière (40) et disposer le capteur de lumière (40) sous la surface arrière et à l'opposé de la zone d'affichage (1311) ; et
fournir un élément de guidage de lumière (50) ;
disposer l'élément de guidage de lumière (50) sous la surface arrière et permettre à l'élément de guidage de lumière (50) de guider la lumière, en pénétrant dans la zone de non-affichage (1312) depuis la surface avant, vers le capteur de lumière (40) ;
dans lequel l'élément de guidage de lumière (50) comprend une partie verticale (53) perpendiculaire à la surface arrière et une partie horizontale (54) reliée à la partie verticale (53), la partie verticale (53) est située à l'opposé de la zone de non-affichage (1312) et la partie horizontale (54) s'étend depuis une extrémité inférieure de la partie verticale (53) vers le capteur de lumière (40) ; une direction d'incidence de lumière de l'élément de guidage de lumière (50) est perpendiculaire à la zone de non-affichage (1312) et/ou une direction de sortie de lumière de l'élément de guidage de lumière (50) est perpendiculaire à une face de détection de lumière du capteur de lumière (40) ;
**caractérisé en ce qu'**une disposition du capteur de lumière (40) se situe entre un premier état dans lequel la face de détection de lumière est perpendiculaire à la surface arrière et un deuxième état dans lequel la face de détection de lumière est éloignée de la surface arrière de sorte qu'un angle inclus entre la face de détection de lumière et la surface arrière se situe entre 90° et 180°.
